# EUROPEAN PATENT SPECIFICATION

(11) **EP 0 569 355 B1**
(45) Date of publication and mention of the grant of the patent: **16.04.1997**
(21) Application number: 91905545.9
(22) Date of filing: 24.01.1991
(51) Int. Cl.: A01G 9/22, A47H 13/04, A47H 23/02

(54) **A CLOTH HANGER CLIP AND A FABRIC INTENDED TO BE USED TOGETHER WITH THE CLIP**
TUCHAUFHÄNGERKLAMMER UND GEWEBE ZUM BENUTZEN MIT DIESER KLAMMER
CROCHET SERVANT A ACCROCHER UN TISSU, ET TISSU DESTINE A ETRE UTILISE AVEC CE CROCHET

(43) Date of publication of application: 18.11.1993
(73) Proprietor: LUDVIG SVENSSON INTERNATIONAL B.V., NL-3225 LV Hellevoetsluis (NL)
(72) Inventor: HENNINGSSON, Göran, S-511 57 Kinna (SE); ANDERSSON, Hans, S-511 55 Kinna (SE)
(74) Representative: Roth, Ernst Adolf Michael
(86) International application number: SE9100050
(87) International publication number: WO9212621

(56) References cited:
- DE-A- 2 303 729
- DE-A- 2 943 743
- DE-A- 3 642 344
- DE-A- 3 702 556
- DE-A- 3 808 686
- DE-B- 1 185 785
- DE-B- 1 246 188
- FR-A- 1 200 629
- US-A- 2 652 586
- US-A- 3 689 957

## Description

### Technical field

The present invention refers to a cloth hanger clip for holding a material, such as curtain, screen or the like, comprising an intermediate portion having a resilient hook at each end, whereby a first one of said hooks defines a material holding space and a second one of said hooks defines a wire holding space, an end of the first hook is movable from first position defining an open material holding space with an opening for entry and exit of the material to a second position such that the end of the hook is received in a recess in the clip defining a closed material holding space. The invention also refers to an assembly including said clip and a fabric intended to be used with the clip.

### Background of the invention

There are previously known substantially S-shaped clips of this kind, which are especially intended for connecting screens of considerable lengths, tenths or hundreds of metres, e.g. greenhouse screens or shading hall screens, to a supporting wire. One of the hooks of the clip has a pointed tip which can penetrate the screen material and the other hook is snapped on the wire.

One problem with this clip is that movements of the screen can cause the material to slip off the hook. The material is also easily damaged by the pointed tip at such movements. Besides the material is exerted to wear by on one hand the clip due to insufficient clamping of the material in the hook and on the other hand by the wire due to insufficient distance therebetween. Another problem is that the hook is easily unhooked from the wire.

Other clips are known, e.g. through US-A-2 652 586, which discloses a clip for suspending curtains, comprising two united loops having open sections, one for insertion of the curtain and the other one for suspending the clip onto a rod or the like. Also, DE-B-1 185 785 discloses a clip consisting of two united portions, one for suspension on suspension means and a second, hook like portion that can be locked by positioning the tip of the hook in a recess. None of the clips according to the prior art are designed for withstanding large loads, especially when it is windy. The hook according to DE-B-1 185 785 is easily unhooked when a force pulls down the bottom portion of the hook.

### Objects and most important features of the invention

One object of the invention is to provide a cloth hanger clip of the kind mentioned above which overcomes these problems and safely fixes the material and prevents it from slipping off the hook. This has been obtained by the fact that said clip in its open position of the end of the first hook is substantially S-shaped, that said first hook is provided with means at the entrance to the material holding space, said means being capable of exerting a clamping effect on the material held therein when said first hook is closed, that said recess is disposed in the intermediate portion having an entrance from the material holding space, and that a major part of said first hook is receivable in said recess, which is situated outside the closed material holding space in the intermediate portion.

Another object is to provide an assembly using a clip according to the invention and a fabric for use with the clip. Said fabric comprises strips of flexible sheet material, whereby adjacent said strips at least one pliable space is arranged, along which the fabric is easily foldable. At certain intervals the fabric includes reinforcing slips of a stronger material than the said strips, adjacent said strips and/or said pliable space, said clip in use position being attached to a reinforcing slip, which is held in the material holding space of the clip, the reinforcing slips being dimensioned to fill the material holding space sufficiently for the first hook to exercise said clamping effect.

### Description of the drawings

The invention will below be closer described with reference to an embodiment shown in the accompanying drawings.
Fig. 1 is a side view on an enlarged scale of a cloth hanger clip according to the invention.
Fig. 2 is a front view of the clip.
Fig. 3 is a section along the line III-III in Fig. 1.
Fig. 4 shows on an enlarged scale the mesh pattern of a warp-knitted fabric intended to be used with the cloth hanger clip according to the invention.
Fig. 5 shows on an enlarged scale and schematically a cross-section through the fabric in Fig. 4.
Fig. 6 shows a view of a piece of fabric for use with the clip according to the invention.
Fig. 7 is a cross-section according to Fig. 6 but shows the fabric folded with cloth hanger clips applied to the fabric.

### Description of embodiments

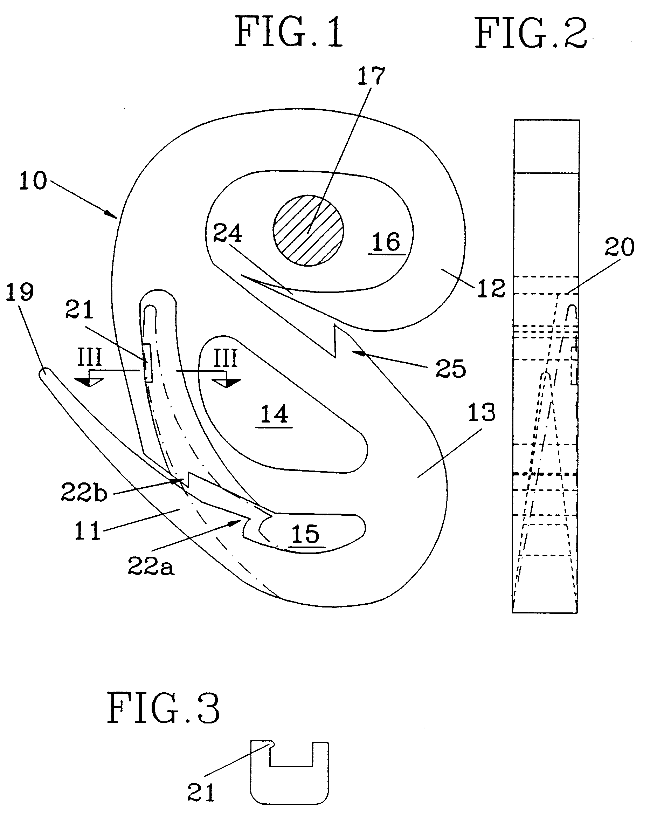

The cloth hanger clip 10 disclosed in Fig. 1 has a substantially S-shaped configuration with a hook-shaped portion 11 and 12 in each end and an intermediate portion 13 therebetween. The intermediate portion 13 has a hole 14 therein, which however has no special function except material-saving reasons. The first hook 11 defines a material-holding space 15 in which the material 26, e.g. a greenhouse or shading hall screen, is suspended, and the second hook 12 defines a wire-holding space 16 for a supporting wire 17. The clip is preferably made of a plastic material, which 10 provides a certain flexibility to the hooks 11, 12.

The first hook 11 has a tip 19 which can penetrate the material 26. The tip 19 may be deflected from the position shown with continuous lines in Figs. 1 and 2 to a position in which it is received in a recess 20 in the intermediate portion 13. The tip 19 is locked in the recess 20 behind a stop lug 21. Instead of a stop lug the recess 20 may be provided with a back draught for locking the tip 19 therein. In this position, which is shown with dotted lines in Figs. 1 and 2, the first hook-shaped portion 11 defines a closed oval space 15 from which the material is prevented from slipping out. The tip 19 which is received in the recess 20 outside the closed space 15, cannot cause any damage to the material. The space 15 is in closed position small enough to exert a certain clamping effect on the material 26 held therein. Thereby sliding movements of the material in the clip, which causes wear of the material are avoided or at least reduced. This is especially important for outdoor use, such as for shade-hall screens, where the material is exposed to wind and weather. For these applications a firm clamping of the material is more important than for indoor use in e.g. greenhouses.

Barbs 22a and b are provided in the entrance to the space 15 on either sides thereof, which are intended to prevent the material 18 to slip out of the space 15 when the tip 19 of the hook 11 is in open position. One of the barbs 22a which is located adjacent to the space 15 has a curved surface making an end termination of the space 15 in closed position of the tip 19 of the hook 11.

The second hook 12 defines a wire-holding space 16 into which a supporting wire 17 can be slipped while slightly deflecting the tip portion 24 of the hook 12. The tip portion 24 is curved inwards so that it extends into the space 16, where it together with a shoulder 25 provided at the entrance to the space 16 provides a labyrinth-shaped exit therefrom, so that unintentional slipping out of the wire 17 is prevented. The distance between the wire-holding space 16 and the material-holding space 15 is large enough to prevent wear of the material against the wire.

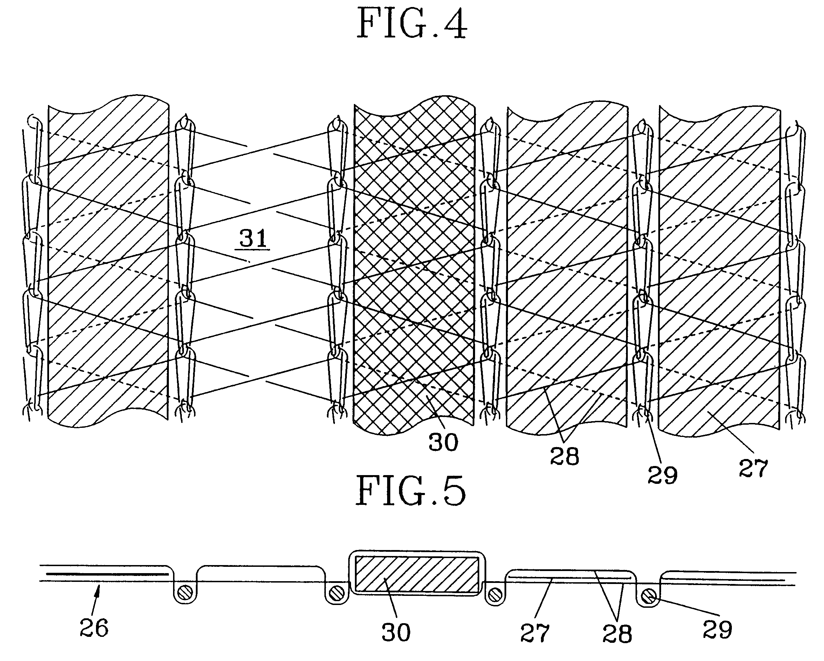

In Fig. 4 there is shown on an enlarged scale the mesh pattern of a warp-knitted fabric 26 for use as a green-house or shade hall screen. The fabric 26 comprises narrow strips 27 of foil, e.g. Al, or plastic film, which are interconnected by textile or plastic threads in a yarn framework including transverse connection threads 28 and longitudinal connection threads 29 located adjacent to the interval between strips 27. The longitudinal threads 29 are preferably in the form of so called pillar stitches, which provide a very rigid and inelastic structure keeping the strips 27 in place. The material in the threads 28 and 29 may be e.g. a flat, round mono-or multi-filament synthetic yarn. The intervals between the strips 26 have been exaggerated in order to make the mesh pattern more clear. In reality the strips 27 are preferably located closely.

At certain intervals the strips are substituted for reinforcing slips 30 of relatively rigid and strong plastic or metallic material, e.g. a wire, plastic strip or group of multi-filament yarn, and which may have different cross-sections, e.g. rectangular, round or oval. The space 31 on one of the sides of the reinforcing slip 30 is empty, i.e. strip-free, or is alternatively semi-filled with a narrower strip, so that the fabric is more pliable and easily folded along said space 31. The threads 28, 29 on either sides of the reinforcing slips 30 and in the pliable space 31 are preferably of a softer more pliable material than in the rest of the fabric, in order to facilitate folding.

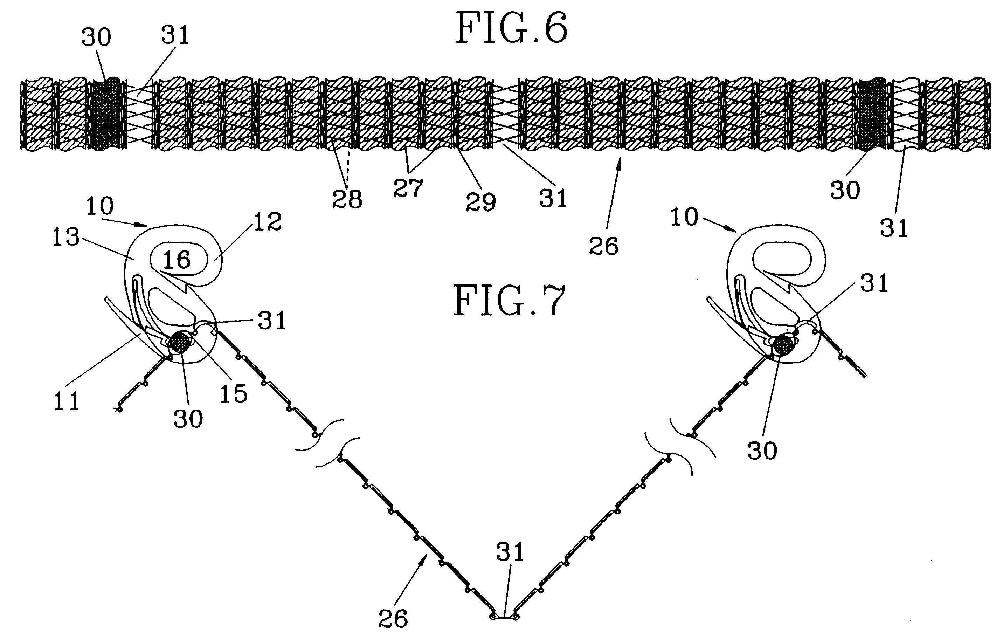

As is shown in Figs. 6 and 7 reinforcing slips 30 are arranged adjacent every other pliable space 31, i.e. at the foldings that are intended to be suspended in a supporting wire. In fabrics used for e.g. shade hall screens, which should admit more ventilation than e.g. a greenhouse screen, strip-free or semi-filled spaces 31 are arranged also between the foldings, so may e.g. every second or third space between the longitudinal connection threads 29 be strip-free or semi-filled. Clips 10 are attached to the fabric 26 at the foldings provided with reinforcing slips 30. The first hook 11 is passed through the space 31, under the reinforcing slip 30 and up through the interval between the reinforcing slip 30 and the adjacent strip 27. The reinforcing slip 30 fills out an essential part of the material holding space 15 so that a certain clamping effect is exerted thereon by the clip 10. In fig. 7 the clips 10 are for the sake of clarity shown in a front view located perpendicular to the plane of the fabric 26. In reality when the second hook 12 of the clip 10 is attached to a supporting wire extending parallel to the pliable spaces 31 of the fabric 26, it will be turned about 45° with respect to the plane of the fabric.

The clip may be used with other types of fabrics than the one disclosed, so may e.g. the fabric consist of strips in both longitudinal and transverse direction at which the yarn framework can be eliminated.

The invention is of course not limited to the embodiment described above and shown in the drawings, and other embodiments and modifications may occur within the scope of the enclosed claims.

## Claims

1. A cloth hanger clip (10) for holding a material, such as curtain, screen or the like, comprising an intermediate portion (13) having a resilient hook (11, 12) at each end, whereby a first one of said hooks (11) defines a material holding space and a second one of said hooks (12) defines a wire holding space (16), an end of the first hook (11) being movable from a first position defining an open material holding space (15) with an opening for entry and exit of the material to a second position such that the end (19) of the hook is received in a recess (20) in the clip (10) defining a closed material holding space (15),
characterized therein,
that said clip (10) in its open position of the end of the first hook is substantially S-shaped,
that said first hook (11) is provided with means (22a) at the entrance to the material holding space (15), said means being capable of exerting a clamping effect on the material held therein when said first hook (11) is closed,
that said recess (20) is disposed in the intermediate portion (13) having an entrance from the material holding space (15), and that a major part of said first hook is receivable in said recess (20), which is situated outside the closed material holding space in the intermediate portion.

2. A cloth hanger clip according to Claim 1, characterized in that at the opening of the material holding space (15) and at an opening of the wire holding space said clip is provided with stop means (22a, 22b, 25), such as barbs or shoulders or the like, preventing the material or wire respectively from slipping out from their respective holding spaces.

3. An assembly comprising at least one clip (10) according to claim 1 or 2, suspension means (17) and a fabric, said fabric comprising strips (27) of flexible sheet material, whereby adjacent said strips (27) at least one pliable space (31) is arranged, along which the fabric (26) is easily foldable,
characterized therein,
that said fabric at certain intervals includes reinforcing slips (30) of a stronger material than the said strips (27), adjacent said strips (27) and/or said pliable space (31),
that said clip (10) in use position is attached to a reinforcing slip (30), which is held in the material holding space (15) of the clip, and
that the reinforcing slips (30) are dimensioned to fill the material holding space (15) sufficiently for the first hook to exercise said clamping effect.

4. An assembly as claimed in claim 3,
characterized therein,
that said pliable space (31) of said fabric adjacent said reinforcing slip (30) is strip-free or semi-filled with a narrower strip as compared to the other strips.

5. An assembly as claimed in claim 3,
characterized therein,
that said strips (27) of said fabric are interconnected by a yarn framework and that the material in said pliable spaces (31) is softer than in the rest of the fabric.

## Patentansprüche

1. Stoffaufhängeklammer (10) zum Halten eines Stoffs, zum Beispiel eines Vorhangs, Schirms o.ä., aufweisend einen Zwischenabschnitt (13) mit einem elastischen Haken (11, 12) an jedem Ende, wodurch ein erster Haken (11) einen Raum (15) zum Halten eines Stoffs und ein zweiter Haken (12) einen Raum (16) zum Halten eines Drahts umgrenzt, wobei ein Ende des erstens Hakens (11) aus einer ersten Stellung, in der ein offener Raum (15) zum Halten des Stoffs mit einer Öffnung zum Einführen und Herausnehmen des Stoffs umgrenzt wird, in eine zweite Stellung beweglich ist, so daß das Ende (19) des Hakens von einer Aussparung (20) in der Klammer (10) aufgenommen und ein geschlossener Raum (15) zum Halten des Stoffs umgrenzt wird,
dadurch gekennzeichnet,
daß die Klammer (10) in geöffneter Stellung des Endes des ersten Hakens im wesentlichen S-förmig ist,
der erste Haken (11) am Eingang zum stoffhaltenden Raum (15) Mittel (22a) hat, die in der Lage sind, bei geschlossenem ersten Haken (11) eine festklemmende Wirkung auf den gehaltenen Stoff auszuüben,
die Aussparung (20) im Zwischenabschnitt (13) mit Zugang zum stoffhaltenden Raum (15) liegt und ein Hauptteil des ersten Hakens von der Aussparung (20) aufgenommen wird, die sich außerhalb des geschlossenen stoffhaltenden Raums im Zwischenabschnitt befindet.

2. Stoffaufhängeklammer nach Anspruch 1, dadurch gekennzeichnet, daß die Klammer an der Öffnung des stoffhaltenden Raums (15) und an der Öffnung des drahthaltenden Raums (16) mit Arretiermitteln (22a, 22b, 25), zum Beispiel Widerhaken oder Ansätzen o.ä., versehen ist, die das Herausrutschen des Stoffs oder des Drahts aus ihren jeweiligen Halteräumen verhindern.

3. Zusammenstellung, aufweisend mindestens eine Klammer (10) nach Anspruch 1 oder 2, Aufhängemittel (17) und einen Stoff, wobei der Stoff Streifen (27) flexiblen, dünnen Materials aufweist, wodurch angrenzend an die Streifen (27) mindestens ein biegsamer Raum (31) angeordnet ist, entlang dessen der Stoff (26) leicht faltbar ist,
dadurch gekennzeichnet,
daß der Stoff in bestimmten Abständen angrenzend an die Streifen (27) und/oder den biegsamen Raum (31) Verstärkungsstreifen (30) aus einem stärkeren Material als dem der Streifen (27) einschließt,
die Klammer (10) in Anwendung an einem Verstärkungsstreifen (30) befestigt ist, der im stoffhaltenden Raum (15) der Klammer festgehalten wird, und
die Verstärkungsstreifen (30) so bemessen sind, daß sie den stoffhaltenden Raum (15) ausreichend ausfüllen, damit der erste Haken seine festklemmende Wirkung ausüben kann.

4. Zusammenstellung nach Anspruch 3,
dadurch gekennzeichnet,
daß der biegsame Raum (31) des Stoffs angrenzend an den Verstärkungsstreifen (30) entweder streifenfrei oder zur Hälfte mit einem Streifen ausgefüllt ist, der schmaler als die anderen Streifen ist.

5. Zusammenstellung nach Anspruch 3,
dadurch gekennzeichnet,
daß die Streifen (27) des Stoffs untereinander durch ein Garngefüge verbunden sind und der Stoff in den biegsamen Räumen (31) weicher als im restlichen Stoff ist.

## Revendications

1. Attache (10) de suspension de tissu pour maintenir un matériau, par exemple un rideau, un écran ou similaire, comprenant une partie intermédiaire (13) dotée, à chacune de ses extrémités, d'un crochet flexible (11, 12), le premier desdits crochets (11) définissant un espace de maintien du matériau et le second desdits crochets (12) définissant un espace de maintien de câble (16), une extrémité du premier crochet (11) étant mobile entre une première position définissant un espace ouvert de maintien du matériau (15) avec une ouverture pour l'entrée et la sortie du matériau et une seconde position où l'extrémité (19) du crochet est reçue dans un logement (20) intérieur à l'attache (10) définissant un espace fermé de maintien de matériau (15),
caractérisée en ce que,
ladite attache (10), lorsque l'extrémité du premier crochet est ouvert, a essentiellement la forme d'un S,
en ce que ledit premier crochet (11) est doté d'un moyen (22a) prévu à l'entrée de l'espace de maintien du matériau (15), ledit moyen étant en mesure d'exercer une contrainte de serrage sur le matériau maintenu à l'intérieur, lorsque ledit premier crochet (11) est fermé,
en ce que ledit logement (20) est disposé dans la partie intermédiaire (13) comportant une entrée pour l'espace de maintien de matériau (15), et
en ce que la plus grande partie dudit premier crochet peut être reçue dans ledit logement (20) qui est situé à l'extérieur de l'espace fermé de maintien de matériau de la partie intermédiaire.

2. Attache de suspension de tissu selon la revendication 1, caractérisée en ce que, au niveau de l'ouverture de l'espace de maintien de matériau (15) et au niveau de l'ouverture de l'espace de maintien de câble, sont prévus des moyens d'arrêt (22a, 22b, 25) tels que des barbes, des épaulements ou similaire, pour empêcher le matériau ou le câble, respectivement, de glisser hors des espaces de maintien respectifs.

3. Ensemble comprenant au moins une attache (10) selon l'une ou l'autre des revendications 1 et 2, un moyen de suspension (17) et un tissu, ledit tissu comprenant des bandes (27) de matériau flexible en feuille, une zone pliable (31) au moins étant disposée de façon adjacente auxdites bandes (27), le tissu (26) pouvant se plier facilement le long de celle-ci,
caractérisé en ce que ledit tissu comporte, selon un certain intervalle, des renforts (30) en matériau plus solide que lesdites bandes (27), adjacents auxdites bandes (27) et/ou à ladite zone pliable (31),
en ce que ladite attache (10), en position d'utilisation, est attachée à un renfort (30) qui est maintenu dans l'espace de maintien de matériau (15) de l'attache, et
en ce que les renforts (30) sont dimensionnés pour remplir suffisamment l'espace de maintien de matériau (15) de façon à ce que le premier crochet exerce ladite contrainte de serrage.

4. Ensemble selon la revendication 3,
caractérisé en ce que ladite zone pliable (31) dudit tissu, adjacente auxdits renforts (30) est dépourvue de bande ou comporte un semi-remplissage de renfort plus étroit que les autres bandes.

5. Ensemble selon la revendication 3,
caractérisé en ce que lesdites bandes (27) dudit tissu sont reliées entre elles par une trame de fils et en ce que le matériau desdites zones pliables (31) est plus souple que le reste du tissu.
